# EUROPÄISCHE PATENTSCHRIFT

(11) **EP 2 502 727 B1**
(45) Veröffentlichungstag und Bekanntmachung des Hinweises auf die Patenterteilung: **30.12.2015**
(21) Anmeldenummer: 12159651.4
(22) Anmeldetag: 15.03.2012
(51) Int. Cl.: B29C 65/74, B29C 65/18, B65B 51/14, B65B 51/30

(54) **Verbesserter Unterstempel für dicke Folienbahnen**
Improved lower punch for thick film webs
Poinçon inférieur amélioré pour bandes de feuilles épaisses

(30) Priorität: 21.03.2011 DE 102011015111
(43) Veröffentlichungstag der Anmeldung: 26.09.2012
(73) Patentinhaber: Beck Packautomaten GmbH & Co. KG, 72636 Frickenhausen (DE)
(72) Erfinder: Gonser, Martin, 72636 Frickenhausen (DE)
(74) Vertreter: Witte, Weller & Partner Patentanwälte mbB

(56) Entgegenhaltungen:
- DD-A1- 74 733
- DE-A1- 2 156 485
- FR-A1- 2 230 484
- US-A- 3 982 991
- US-A- 4 949 846

## Beschreibung

Die vorliegende Erfindung betrifft einen Unterstempel für eine Quertrennschweißvorrichtung einer Folienverpackungsmaschine, mit einer Druckaufnahmeeinrichtung, die dazu ausgebildet ist, ein Gegenelement für einen Oberstempel bereitzustellen, und einer Stützeinrichtung zum Stützen der Druckaufnahmeeinrichtung.

Ein derartiger Unterstempel ist beispielsweise aus der Druckschrift DE 20 2006 014 892 U1 bekannt.

Verpackungsmaschinen werden in vielen industriellen Anwendungen zum Verpacken von unterschiedlichen Packgütern verwendet. Bei den Packgütern kann es sich um Konsumartikel wie beispielsweise Datenträger, Bücher oder übliche, in Supermärkten vertriebene Artikel handeln, aber auch um Sonderartikel wie beispielsweise Ersatzteile oder Baumaterialien wie Ton. Auch bei Zeitschriften mit Beiliegern oder im Bereich des Versandhandels finden Verpackungsmaschinen regelmäßig Anwendung.

Die vorliegende Erfindung beschäftigt sich in erster Linie mit Folienverpackungsmaschinen, bei denen grundsätzlich zwischen Formschultermaschinen, Serienpackmaschinen und Banderoliermaschinen unterschieden wird. Während Formschultermaschinen und Serienpackmaschinen dazu vorgesehen sind, ein Packgut vollständig in Folie einzuhüllen, wird mittels einer Banderoliermaschine lediglich eine Banderole um ein zu verpackendes Packgut gelegt.

Unter "Verpackungsmaschine" sind im Rahmen der vorliegenden Erfindung somit alle der voranstehend genannten Arten von Verpackungsmaschinen zu verstehen. Unter dem Begriff "Umverpackung" sind sowohl das Packgut vollständig einhüllende Folienverpackungen zu verstehen, die zum einen als Halbschläuche und zum anderen auch in Form von separaten Folien zugeführt werden können, als auch Banderolen.

Allen Verpackungsmaschinen ist gemein, dass die Umverpackung an zumindest einer Seite verschweißt und abgetrennt werden muss. Für Banderolen ist dies in der Regel lediglich an einer Seite der Fall, bei Formschultermaschinen an drei Seiten und bei Serienpackmaschinen an allen vier Seiten des Packguts. Verpackungsmaschinen weisen daher stets eine sogenannte Quertrennschweißvorrichtung auf, die die Umverpackung quer zur Transportrichtung des Packguts in der Verpackungsmaschine verschweißt und zumindest teilweise durchtrennt. Des Weiteren weisen Verpackungsmaschinen Längsschweißvorrichtungen bzw. Längstrennschweißvorrichtungen auf, die die Umverpackung parallel zu der Transportrichtung des Packguts verschweißen und einen eventuell vorhandenen Folienüberstand abtrennen. Der Folienüberstand wird dann in der Regel mittels einer Folienrückführung aufgefangen und wiederverwertet.

Verpackungsmaschinen sind nur selten für lediglich ein bestimmtes Packgut hergestellt. Üblicherweise sollen Verpackungsmaschinen dazu in der Lage sein, Packgüter unterschiedlicher Dimensionen verarbeiten zu können. Die Packgüter unterscheiden sich dabei zum einen in ihrer Breite und zum anderen in ihrer Höhe. Entsprechend wurde vorgeschlagen, die Längsschweißvorrichtung der Verpackungsmaschine verstellbar auszuführen, um die Verpackungsmaschine an unterschiedliche Packgüter anpassen zu können.

Des Weiteren sind Folienbahnen verschiedener Dicken, Farben und Faltungen möglich, da die Umverpackungen von Packgut zu Packgut variieren können. Auch das Folienmaterial kann von Packgut zu Packgut verschieden sein.

Auch die Taktrate, mit der die Packgüter in die Folienverpackungsmaschine einfahren und zu verpacken sind, kann variieren. Dabei ist es grundsätzlich so, dass eine höhere Taktrate eine höhere Vorschubgeschwindigkeit des Packguts bedingt, so dass die Verweildauer eines Folienabschnitts in einer feststehenden Quertrennschweißvorrichtung abnimmt. Einem Oberstempel und einem Unterstempel der Quertrennschweißvorrichtung verbleibt eine kürzere Zeitdauer zum Trennschweißen. Neben der Verweildauer der Quertrennschweißstempel auf der Folie spielen der auf die Folie mittels der Quertrennschweißvorrichtung beaufschlagte Druck und die Temperatur des beheizten Oberstempels eine Rolle bei der Frage, ob eine qualitativ hochwertige Trennschweißnaht über die gesamte Foliendicke erzeugt werden kann. Es wurde im Stand der Technik bereits vorgeschlagen, bei Formschultermaschinen mitlaufende Querschweißeinrichtungen vorzusehen, um die Verweildauer zu erhöhen, oder den Anpressdruck der Stempel der Quertrennschweißvorrichtung zu regeln, um ein bestmögliches Schweißergebnis zu erhalten.

Entsprechend beschreibt die Druckschrift US 5,653,085 B eine Formschultermaschine mit mitlaufender Querschweißeinrichtung und einer Regelung für den Anpressdruck der Schweißbacken der Quertrennschweißvorrichtung.

Auch bei einer mitlaufenden Querschweißeinrichtung kann es jedoch insbesondere bei hohen Vorschubgeschwindigkeiten bzw. Taktraten zu insgesamt geringen Verweildauern kommen. Da bei mitlaufenden Querschweißeinrichtungen die Transporteinrichtungen in der Regel nicht zyklisch stillstehen sondern sich kontinuierlich fortbewegen, kann es durch daraus begründeten geringen Verweildauern trotz eines hohen Anpressdrucks beim Quertrennschweißen von dicken Folienbahnen zu einem minderwertigen Schweißergebnis kommen. Insbesondere bei mehrlagigen Folienbahnen kann dies dazu führen, dass äußere Folienbahnen zwar gut verschweißt, innen liegende Folienbahnen jedoch nur schlecht oder gar nicht verschweißt werden. Bisher hat man versucht, diesem Problem mit einer Erhöhung der Temperatur des Oberstempels zu begegnen. Hierbei stößt man jedoch an gewisse Grenzen, da ab einer bestimmten Temperatur des Oberstempels über eine Schmelztemperatur des Folienmaterials neue Probleme beim Trennschweißen auftreten. Die Schmelztemperatur eines beispielhaft zur Herstellung einer Folie verwendeten Polyethylenmaterials liegt bei etwa 170 bis 180 °C. Beim Verschweißen dicker Folienbahnen wurde die Temperatur des Oberstempels teilweise weit über diesen Schmelzpunkt hinaus erhöht, bis zu etwa 280 °C. Dies kann zwar den Erfolg bringen, dass über die gesamte Dicke der Folienbahnen ein ausreichender Wärmetransport zum Trennschweißen erfolgt, es führt jedoch bei den außen bzw. oben liegenden Schichten zu einem vollständigen Schmelzen des Folienmaterials, da dieses über seinen Schmelzpunkt erwärmt wird. Dies kann zu einem Fließen des Folienmaterials, Schmelzrückständen und einer unangenehmen Geruchsentwicklung im Bereich der Folienverpackungsmaschine führen. Insbesondere bei farbigen Folien, die in ihrem Material Farbpigmente aufweisen, treten viele Schmelzrückstände auf. So führt eine einfache Erhöhung der Temperatur des Oberstempels nicht zu einer verbesserten, sondern aufgrund neuer Probleme zu einer insgesamt ähnlich schlechten Verschweißung.

Die Druckschriften FR 2 230 484 A1, DD 74 733 A1, US 49 49 846 A, DE 22 156 485 A1 und US 3 982 991 A zeigen Quertrennschweißeinrichtungen mit Heizelementen.

Es ist eine Aufgabe der vorliegenden Erfindung, die voranstehenden Probleme zu beseitigen und eine Möglichkeit zum qualitativ hochwertigen Quertrennschweißen von Folienbahnen, insbesondere dicken, mehrlagigen Folienbahnen, bereitzustellen.

Gemäß einem ersten Aspekt der Erfindung wird daher vorgeschlagen, dass der Unterstempel des Weiteren zumindest eine Beheizungseinrichtung aufweist, die zum Beheizen der Stützeinrichtung ausgebildet ist.

Mittels eines beheizten Unterstempels wird es möglich, auch dickere Folienbahnen, die gegebenenfalls mehrlagig ausgebildet sind, über die gesamte Dicke der Folienbahn und alle Lagen qualitativ hochwertig zu verschweißen. Der erfindungsgemäße Unterstempel zeichnet sich somit dadurch aus, dass er beheizt ist. Dies ermöglicht einen Wärmetransport sowohl mittels des Oberstempels als auch des Unterstempels auf die zu verschweißende Folienbahn. Diese beidseitige Wärmebeaufschlagung wirkt sich insbesondere bei mehrlagigen dicken Folienbahnen dahingehend aus, dass alle Folienlagen gleichmäßig gut verschweißt werden. Insbesondere wird ermöglicht, auch Folienbahnen mit mehrlagigem Aufbau und einer Gesamtdicke von etwa 70 bis 80 µm mit einer Stempeltemperatur unterhalb des Schmelzpunkts des Folienmaterials zu verschweißen. Sowohl Ober- als auch Unterstempel müssen beispielsweise bei einem Polyethylenmaterial und einer Dicke von 80 µm lediglich eine Temperatur von etwa 130 °C aufweisen, um ein zufriedenstellendes Schweißergebnis zu erhalten.

Da nunmehr eine Temperatur unterhalb des Schmelzpunkts des Folienmaterials ausreichend ist, tritt kein Schmelzen bzw. Zerfließen einzelner Folienschichten auf, und das Quertrennschweißen erfolgt rückstandsfrei und ohne Geruchsntwicklung. Ein weiterer Vorteil ist die aufgrund der geringeren Stempeltemperatur gerin gere Wärmeausdehnung des Ober- bzw. Unterstempels. Insbesondere bei einem Packgut mit großer Breite kann die absolute Wärmeausdehnung des Ober- bzw. Unterstempels bei hohen Temperaturen über 200 °C mehrere Millimeter betragen, was entsprechend konstruktiv vorzuhalten bzw. auszugleichen ist und die Gesamtkonstruktion der Folienverpackungsmaschine aufwändiger gestaltet. Durch die geringeren Schweißtemperaturen kann dies weitgehend vermieden werden.

Eine Beheizung der Stützeinrichtung ermöglicht aber einen ausreichenden Wärmetransport in die Folienbahnen und gleichzeitig die Verwendung bekannter Druckaufnahmeeinrichtungen, beispielsweise aus einem hitzebeständigen Kunststoffmaterial, etwa Silikon, oder einem Gummimaterial, ohne dass die Druckaufnahmeeinrichtung durch die beheizte Stützeinrichtung negativ beeinflusst wird.

Des Weiteren ist vorgesehen, dass die Stützeinrichtung eine Stützläche aufweist, auf der die Druckaufnahmeeinrichtung aufliegt, wobei eine Querschnittsgeometrie der Stützfläche aus zwei weg von der Druckaufnahmeeinrichtung aufeinander zu laufenden Gegenbacken gebildet ist.

Wenn bezüglich des Unterstempels oder des Oberstempels von einer "Querschnittsgeometrie" im Rahmen dieser Beschreibung gesprochen wird, erstreckt sich der Querschnitt parallel zu einer Transportrichtung des Packguts. Da der Oberstempel bzw. der Unterstempel seine Längserstreckung quer zu der Transportrichtung aufweist, muss sich ein Querschnitt durch diesen jeweiligen Längsschnitt dann wiederum parallel zu der Transportrichtung des Packguts erstrecken. Durch die Ausbildung der Stützfläche aus zwei weg von der Druckaufnahmeeinrichtung aufeinander zu laufenden Gegenbacken wird gewissermaßen eine pfeilförmige Ausgestaltung der Stützfläche erzielt, wobei die Spitze des Pfeils nach unten bzw. weg von der Folienbahn zeigt. Dies ermöglicht ein gewisses Eindringen des Oberstempels bzw. ein Nachgeben der Druckaufnahmeeinrichtung und somit über die gesamte Breite des Querschnitts ein gleichmäßiges Anliegen des Oberstempels an dem Unterstempel zum Zeitpunkt des Quertrennschweißens.

Gemäß einem zweiten Aspekt wird eine Quertrennschweißvorrichtung für eine Folienverpackungsmaschine bereitgestellt, wobei die Quertrennschweißvorrichtung einen Unterstempel aufweist, wobei der Unterstempel eine Druckaufnahmeeinrichtung, die dazu ausgebildet ist, ein Gegenelement für einen Oberstempel bereitzustellen, und eine Stützeinrichtung zum Stützen der Druckaufnahmeeinrichtung aufweist, wobei der Unterstempel des Weiteren zumindest eine Beheizungseinrichtung aufweist, die zum Beheizen der Stützeinrichtung ausgebildet ist, wobei die Stützeinrichtung des Unterstempels eine Stützfläche aufweist, auf der die Druckaufnahmeeinrichtung aufliegt, und wobei die Quertrennschweißvorrichtung des Weiteren einen Oberstempel aufweist, der eine dem Unterstempel zugewandte Quertrennschweißfläche aufweist, wobei die Quertrennschweißfläche eine Querschnittsgeometrie aufweist, die der Querschnittsgeometrie der Stützfläche entspricht.

Eine Folienverpackungsmaschine gemäß einem dritten Aspekt der Erfindung weisen jeweils einen Unterstempel gemäß dem ersten Aspekt der Erfindung oder eine Quertrennschweißvorrichtung gemäß dem zweiten Aspekt der Erfindung und damit dieselben Vorteile auf.

Die eingangs gestellte Aufgabe wird daher vollkommen gelöst.

In einer Ausgestaltung der Erfindung ist vorgesehen, dass der Unterstempel eine Längsachse aufweist, entlang derer sich der Unterstempel erstreckt, wobei die Beheizungseinrichtung parallel zu der Längsachse durch die Stützeinrichtung geführt ist.

Dies ermöglicht eine besonders gleichmäßige Erwärmung der Stützeinrichtung über ihre gesamte Breite und damit ein ebenso gleichmäßiges wie qualitativ hochwertiges Verschweißen der Folienbahn.

In einer weiteren Ausgestaltung ist vorgesehen, dass die Beheizungseinrichtung als Heizpatrone ausgebildet ist.

Bei einer Heizpatrone handelt es sich beispielsweise um eine in einem Rohr angeordnete, gewendelte Heizwicklung, die mit einem Strom beaufschlagt werden kann und so die Heizpatrone und die Stützeinrichtung erwärmt. Die bei einer derartigen Heizpatrone übertragene Wärmeleistung kann mittels des eingespeisten Stroms besonders gut geregelt werden und eignet sich daher besonders zum Einsatz in einem erfindungsgemäßen Unterstempel.

In einer weiteren Ausgestaltung ist vorgesehen, dass die Gegenbacken V-förmig aufeinander zu laufen.

In der Regel weisen die Siegelbacken der Quertrennschweißfläche eines Oberstempels im Querschnitt eine V-Form auf. Indem auch die Gegenbacken des Unterstempels entsprechend V-förmig ausgestaltet werden, kann der Oberstempel die Druckaufnahmeeinrichtung um ein gewisses Maß eindrücken, und die Siegelbacken des Oberstempels und die Gegenbacken des Unterstempels liegen einander über der gesamten Breite des Querschnitts im Wesentlichen mit gleichem Abstand gegenüber. Dadurch ergibt sich auch über die gesamte Breite des zwischen dem Oberstempel und dem Unterstempel eingeklemmten Folienabschnitts ein gleichmäßiger Wärmestrom. Dies ist besonders vorteilhaft gegenüber der bisherigen Ausgestaltung von Unterstempeln, die eine im Wesentlichen ebene Stützfläche vorsehen. Ein Oberstempel mit V-förmig angeordneten Siegelbacken würde bei der herkömmlichen, ebenen Ausgestaltung an einem Kontaktpunkt der Siegelbacken bzw. der Spitze des "V"s relativ nahe an dem Unterstempel anliegen, außen wäre der Abstand jedoch größer. Dies würde einen ungleichmäßigen Wärmeübertrag bedeuten. Durch die erfindungsgemäße Ausgestaltung des Unterstempels können diese Nachteile vermieden werden.

Bei einer weiteren Ausgestaltung ist vorgesehen, dass die Gegenbacken einen ersten Winkel einschließen, der in einem Bereich von 130° bis 170° liegt.

Es hat sich gezeigt, dass die Siegelbacken eines Oberstempels durch eine mit einem entsprechenden Winkel gebildete Schweißfinne eine besonders gute Trennschweißnaht erzeugen. Entsprechend sind auch die Gegenbacken des Unterstempels in einer Ausgestaltung mit einem zwischen sich eingeschlossenen Winkel in einem Bereich von 130° bis 170° auszubilden, damit Oberstempel und Unterstempel während des Quertrennschweißens gleichmäßig in Anlage kommen können. Insbesondere schließen die Gegenbacken einen ersten Winkel ein, der in einem Bereich von 140° bis 160° liegt, vorzugsweise beträgt der erste Winkel 150°.

In einer weiteren Ausgestaltung ist vorgesehen, dass eine Querschnittsgeometrie der Druckaufnahmeeinrichtung rechteckig ist, wobei die Druckaufnahmeeinrichtung lediglich mit zwei Kanten auf der Stützfläche aufliegt.

Dadurch, dass die Druckaufnahmeeinrichtung lediglich mit zwei Kanten auf der Stützfläche aufliegt, wird ein direkter Wärmetransport von der Stützeinrichtung in die Druckaufnahmeeinrichtung über einen Flächenkontakt weitgehend vermieden. In Kombination mit einer Ausgestaltung der Stützfläche, in der diese aus zwei weg von der Druckaufnahmeeinrichtung aufeinander zu laufenden Gegenbacken gebildet ist, ergibt sich zwischen der Druckaufnahmeeinrichtung und den Gegenbacken in Ruhelage ein isolierender Luftspalt. Die Druckaufnahmeeinrichtung wird in vollflächige Anlage mit der Stützeinrichtung lediglich dann gedrückt, wenn der Oberstempel auf dem Unterstempel aufliegt. Gleichzeitig ermöglicht diese Ausgestaltung ein leichteres Nachgeben der Druckaufnahmeeinrichtung, wenn diese von dem Oberstempel mit Druck beaufschlagt wird, so dass die Siegelbacken des Oberstempels mit den Gegenbacken des Unterstempels einen über die gesamte Breite des Querschnitts gleichmäßigen Abstand einnehmen können.

In einer weiteren Ausgestaltung ist vorgesehen, dass der Unterstempel einen Temperaturfühler aufweist, der parallel zu einer Längsachse des Unterstempels in die Stützeinrichtung geführt ist.

Mittels des Temperaturfühlers kann die Temperatur der Stützeinrichtung gemessen und so mittels einer Regelungseinrichtung geregelt werden. Indem der Temperaturfühler parallel zu einer Längsachse mit einer gewissen Eindringtiefe in die Stützeinrichtung geführt ist, ist man in der Lage, verlässlichere Temperaturdaten zu erhalten, als dies bei einer Oberflächenmessung der Temperatur der Fall sein würde.

In einer weiteren Ausgestaltung ist vorgesehen, dass der Unterstempel des Weiteren ein Leistenelement aufweist, das parallel zu einer Längsachse des Unterstempels verläuft, wobei das Leistenelement derart an der Stützeinrichtung angeordnet ist, dass es die Druckaufnahmeeinrichtung seitlich abstützt.

Bei einer erfindungsgemäßen Quertrennschweißvorrichtung kann dabei insbesondere vorgesehen sein, dass das Leistenelement des Weiteren derart angeordnet ist, dass es seitlich sowohl des Oberstempels als auch der Stützeinrichtung des Unterstempels verläuft. Insbesondere ist das Leistenelement derart angeordnet, dass der Oberstempel das Leistenelement während des Zusammenführens von Oberstempel und Unterstempel nicht berührt.

Das Führen der Druckaufnahmeeinrichtung in einer Nut der Stützeinrichtung über die gesamte Länge des Unterstempels bzw. die gesamte Breite eines Packguts ist nicht möglich, da ein Oberstempel sonst bei einem Zusammenführen von Oberstempel und Unterstempel auf die Nutränder aufschlagen könnte. Jedoch kann es insbesondere bei einer mitlaufenden Quertrennschweißeinrichtung, wie sie in der Druckschrift US 5,653,085 B gezeigt ist, vorkommen, dass durch die Walkbewegung die Druckaufnahmeeinrichtung mit zunehmender Betriebsdauer in Transportrichtung von der Stützeinrichtung rutscht. Um dieses zu verhindern, ist das Leistenelement angeordnet. Insbesondere ist, wie voranstehend beschrieben, das Leistenelement dabei derart angeordnet, dass es seitlich der Gegenbacken verläuft, so dass die Siegelbacken eines Oberstempels nicht auf das Leistenelement aufschlagen können.

In einer Ausgestaltung einer Quertrennschweißvorrichtung ist vorgesehen, dass die Quertrennschweißvorrichtung einen Unterstempel gemäß dem ersten Aspekt der Erfindung aufweist und des Weiteren die Stützeinrichtung des Unterstempels eine Stützfläche aufweist, auf der die Druckaufnahmeeinrichtung aufliegt, und wobei die Quertrennschweißvorrichtung des Weiteren einen Oberstempel aufweist, der eine dem Unterstempel zugewandte Quertrennschweißfläche aufweist, wobei die Quertrennschweißfläche eine Querschnittsgeometrie aufweist, die der Querschnittsgeometrie der Stützfläche entspricht.

Auf diese Weise ist sichergestellt, dass bei einem Zusammenführen von Oberstempel und Unterstempel die Quertrennschweißfläche und die Stützfläche über die gesamte Breite der Querschnittsgeometrie gleichmäßig beabstandet zusammengeführt werden, so dass eine gleichmäßige Wärmeübertragung auf die Folienbahn und eine qualitativ hochwertige Trennschweißnaht sichergestellt sind.

In einer weiteren Ausgestaltung ist vorgesehen, dass eine Querschnittsgeometrie der Quertrennschweißfläche des Oberstempels aus zwei in Richtung des Unterstempels aufeinander zu laufenden Siegelbacken gebildet ist, die einen zweiten Winkel einschließen, wobei eine Querschnittsgeometrie der Stützfläche aus zwei weg von der Druckaufnahmeeinrichtung aufeinander zu laufenden Gegenbacken gebildet ist, die einen ersten Winkel einschließen, und wobei der erste Winkel dem zweiten Winkel entspricht.

Die Ausgestaltung der Quertrennschweißfläche und der Stützfläche mittels zweier Siegelbacken bzw. Gegenbacken stellt eine konstruktiv besonders einfache Weise dar, ein zufriedenstellendes Trennschweißergebnis zu erhalten. Insbesondere ermöglicht dies eine konstruktiv einfache Ausgestaltung einer Trennschweißfinne des Oberstempels, die eine Wärmetrennung der Folienbahn bewirkt. Unter einer Wärmetrennung ist dabei zu verstehen, dass das Trennen der Folienbahnen nicht durch eine mechanische Trennung bzw. durch ein Zerschneiden bewirkt wird, sondern aufgrund der auf die Folienbahn übertragenen Wärme.

In einer weiteren Ausgestaltung ist vorgesehen, dass der Oberstempel zumindest eine Beheizungseinrichtung zur Beheizung der Quertrennschweißfläche aufweist.

Insbesondere kann es auch vorgesehen sein, dass mehrere Beheizungseinrichtungen im Oberstempel vorgesehen sind, insbesondere kann jede Siegelbacke eine eigene Beheizungseinrichtung aufweisen. Durch eine Beheizung von sowohl dem Oberstempel als auch dem Unterstempel wird letztendlich ein beidseitiger Wärmetransport auf die Folienbahn ermöglicht. Des Weiteren gestattet dies, relativ geringe Temperaturen, insbesondere etwa 130 °C, an den Siegelbacken und den Gegenbacken vorzusehen, die insbesondere unterhalb einer Schmelztemperatur der Folienbahnen liegen. Aufgrund der beidseitigen Wärmebeaufschlagung der Folienbahn ist die insgesamt auf die Folienbahn übertragene Wärmeleistung für ein zufriedenstellendes Trennschweißergebnis ausreichend.

In einer weiteren Ausgestaltung kann vorgesehen sein, dass der Oberstempel ein aus der Quertrennschweißfläche herausragendes Schneidmesser aufweist. Insbesondere kann vorgesehen sein, dass das Schneidmesser zwischen den Siegelbacken aus der Quertrennschweißfläche herausragt.

Für den Fall, dass die Folienbahn eine derart große Dicke aufweist, dass ein Trennen der Folienbahn lediglich aufgrund einer Wärmeeinwirkung bei gegebener Verweildauer nicht möglich ist, kann zusätzlich ein Schneidmesser im Oberstempel vorgesehen sein, das die Folienbahn mechanisch durch ein Zerschneiden trennt. Durch die Wärmeübertragung wird dann letztlich in jedem Fall ein Verschweißen der mechanisch zertrennten Enden der Folienbahn bewirkt.

Ausführungsbeispiele der Erfindung sind in der Zeichnung dargestellt und werden in der nachfolgenden Beschreibung näher erläutert. Es zeigen:
- Fig. 1: eine schematische Ansicht einer Folienverpackungsmaschine,
- Fig. 2: eine lediglich beispielhafte Darstellung des Abschnitts II in der Fig. 1,
- Fig. 3: einen Querschnitt entlang einer Linie III-III in Fig. 2, die schematisch einen erfindungsgemäßen Unterstempel zeigt,
- Fig. 4: eine Querschnittsansicht entlang einer Linie IV-IV in Fig. 3, und
- Fig. 5: eine Querschnittsansicht entlang einer Linie V-V in Fig. 3.

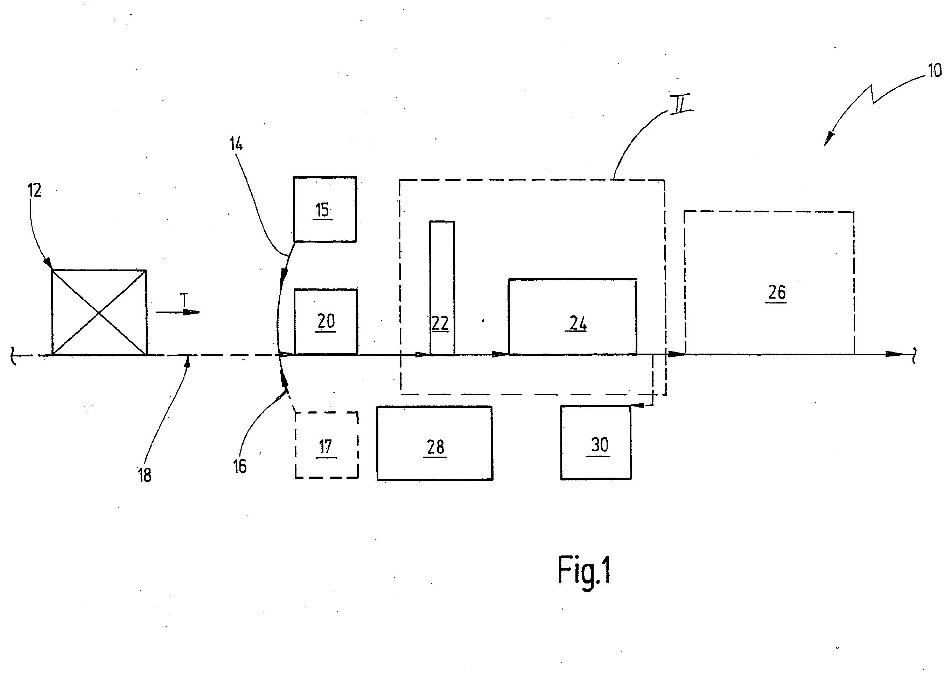

Fig. 1 zeigt eine Folienverpackungsmaschine 10 in einer schematischen Ansicht. Die Verpackungsmaschine 10 dient dazu, ein Packgut 12 mit einer Umverpackung zu versehen. Dazu wird das Packgut 12 in einer Transportrichtung T durch die Folienverpackungsmaschine 10 bewegt.

Das Packgut 12 wird von der Folienverpackungsmaschine 10 mit einer Folienbahn 14, die von einer Folienzuführung 15 abgewickelt wird, eingehüllt. Handelt es sich um eine Serienpackmaschine, kann eine weitere Folienbahn 16, die von einer weiteren Folienzuführung 17 abgewickelt wird, vorgesehen sein. Diese Art der Einhüllung entspricht dann dem Prinzip einer sogenannten Serienpackmaschine, so dass dementsprechend die vorliegende Erfindung am Beispiel einer als Serienpackmaschine ausgestalteten Folienverpackungsmaschine 10 erläutert wird.

Die obere Folienbahn 14 und die untere Folienbahn 16 laufen in einer Folienebene 18 zusammen. Das Packgut 12 fährt somit in die aufeinander zulaufende obere Folienbahn 14 und untere Folienbahn 16 ein, wobei die Folienbahnen 14, 16 zunächst einer Querstraffung unterzogen werden.

Dazu ist eine Querstraffungsvorrichtung 20 vorgesehen. Das umhüllte Packgut 12 mit den quer gestrafften Folienbahnen 14, 16 erreicht eine Quertrennschweißvorrichtung 22. Die Quertrennschweißvorrichtung 22 schweißt die Folienbahnen 14, 16 quer zu der Transportrichtung T zusammen und durchtrennt die Folienbahnen 14, 16 zumindest teilweise, so dass das Packgut 12 entlang der Schweißnaht keinen Kontakt mehr zu dem ihm vorhergehenden Packgut 12 hat.

Anschließend fährt das Packgut 12 durch eine Längstrennschweißvorrichtung 24, die dazu vorgesehen ist, die Folienbahnen 14, 16 seitlich des Packguts 12 zusammenzuschweißen und einen seitlichen Folienüberstand abzutrennen. Schließlich wird die entgegengesetzt zu der Transportrichtung T weisende Seite des Packguts 12 erneut von der Quertrennschweißvorrichtung 22 verschweißt und abgetrennt. Das Packgut 12 ist nun an allen vier Seiten verschweißt und beschnitten, so dass das Packgut 12 von einer Folienumhüllung komplett umgeben ist.

Die Abfolge der Quertrennschweißvorrichtung 22, der Längstrennschweißvorrichtung 24 und der Querstraffungsvorrichtung 20 ist lediglich beispielhaft in einer häufig auftretenden Konfiguration wiedergegeben. Die Abfolge dieser Vorrichtungen kann auch anders sein, beispielsweise kann vorgesehen sein, die Quertrennschweißvorrichtung 22 nach der Längstrennschweißvorrichtung 24 anzuordnen. Auch können Elemente der Querstraffungsvorrichtung 20 zwischen oder in der Quertrennschweißvorrichtung 22 oder der Längstrennschweißvorrichtung 24 vorgesehen sein.

Es kann vorgesehen sein, dass sich dann ein Schrumpftunnel 26 anschließt, der auf eine bestimmte Temperatur erwärmt ist und die Folienbahnen 14, 16 auf das Packgut 12 aufschrumpft, so dass die Folienbahnen 14, 16 das Packgut 12 fest und ohne Spiel umschließen. Der Verpackungsvorgang ist dann abgeschlossen.

Das Vorhandensein eines Schrumpftunnels 26 hängt grundsätzlich von den an die Verpackung gestellten Anforderungen ab. Ein Schrumpftunnel 26 muss insbesondere bei Serienpackmaschinen nicht zwingend vorhanden sein.

Des Weiteren weist die Folienverpackungsmaschine 10 in der Regel Verstelleinrichtungen 28 auf, um die Folienverpackungsmaschine 10 auf Packgüter unterschiedlicher Breite, Länge und Höhe einstellen zu können. Auch die Geschwindigkeit des Verpackungsvorgangs kann mittels der Verstelleinrichtungen 28 eingestellt werden. Des Weiteren sind Möglichkeiten vorgesehen, die Folienverpackungsmaschine 10 auf unterschiedliche Folientypen, die beispielsweise in Dicke, Reißfestigkeit und Oberflächenbeschaffenheit voneinander abweichen können, einzustellen.

Letztlich ist in der Regel eine Folienrückführung 30 vorgesehen, die von der Längstrennschweißvorrichtung 24 abgetrenntes überschüssiges Folienmaterial sammelt, um es beispielsweise einem Recyclingprozess zuzuführen.

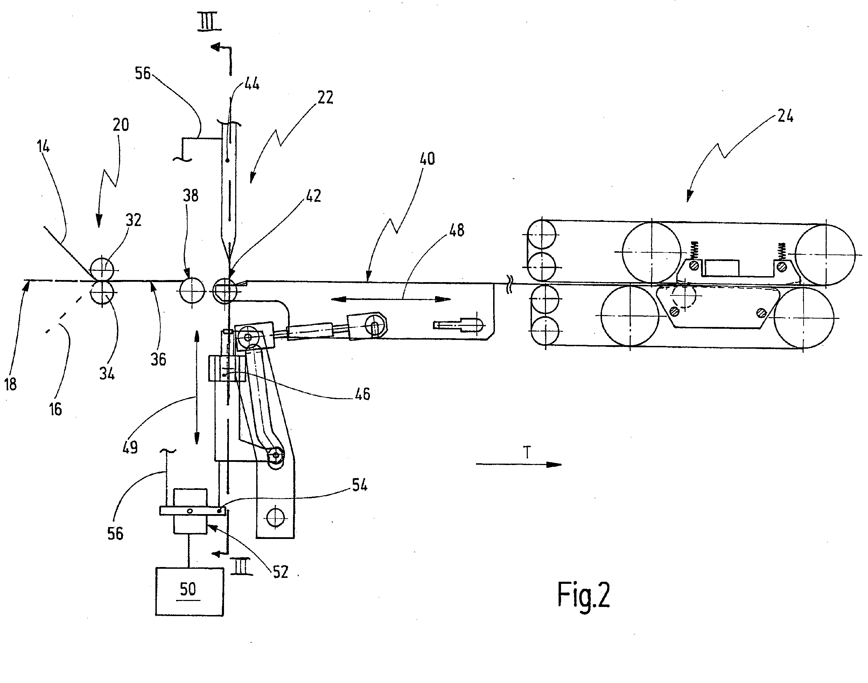

Mit II ist ein Ausschnitt der Folienverpackungsmaschine 10 bezeichnet, der in Fig. 2 in einer Detailansicht dargestellt ist.

Die in der Fig. 2 dargestellte Detailansicht umfasst die Querspannungsvorrichtung 20, die Quertrennschweißvorrichtung 22 und die Längstrennschweißvorrichtung 24.

Die Querspannungsvorrichtung 20 weist in der Regel ein oberes Querspannrad 32 und ein unteres Querspannrad 34 auf, die die obere Folienbahn 14 und die untere Folienbahn 16 zwischen sich einziehen und in einer Querrichtung, d.h. senkrecht zu der Transportrichtung T spannen. Dabei ist in der Regel vorgesehen, dass die Querspannräder 32, 34 mit ihrer Drehachse leicht nach außen geneigt sind.

Eine erste Transporteinrichtung 36 fördert das zu verpackende Packgut auf der Folienebene 18 bis zu der Quertrennschweißvorrichtung 22. Dort endet die erste Transporteinrichtung 36 in einer ersten Umlenkrolle 38. An die erste Transporteinrichtung 36 schließt sich eine zweite Transporteinrichtung 40 an, die das Packgut 12 von der Quertrennschweißvorrichtung 22 zu der Längstrennschweißvorrichtung 24 fördert. Die Längstrennschweißvorrichtung 24 und der Übergang von der zweiten Transporteinrichtung 40 zu der Längstrennschweißvorrichtung 24 sind lediglich schematisch dargestellt und können beliebig ausgestaltet sein.

Die zweite Transporteinrichtung 40 beginnt mit einer zweiten Umlenkrolle 42, die sehr nahe an die erste Umlenkrolle 38 in einer ersten Position herangefahren ist. Diese erste Position ist in der Fig. 2 dargestellt und soll diejenige Position bezeichnen, in der eine zwischen der ersten Umlenkrolle 38 und der zweiten Umlenkrolle 42 vorhandene Stempellücke minimiert ist.

Die Quertrennschweißvorrichtung 22 weist einen Oberstempel 44 und einen Unterstempel 46 auf. Der Oberstempel 44 und der Unterstempel 46 sind aufeinander zu bewegbar, um die obere Folienbahn 14 und die untere Folienbahn 16 zumindest teilweise zu durchtrennen und zu verschweißen.

In der in Fig. 2 dargestellten ersten Position ist dies jedoch nicht möglich, da die Stempellücke geschlossen ist. Der Oberstempel 44 und der Unterstempel 46 können sich nicht treffen, da sich die zweite Umlenkrolle 42 zwischen ihnen befindet.

Daher ist die zweite Transporteinrichtung 40 in horizontaler Richtung, d.h. parallel zu der Folienebene 18, bewegbar. Diese Bewegung ist durch einen Pfeil 48 verdeutlicht.

Der Unterstempel 46 wiederum bewegt sich entlang einer mit einem Pfeil 49 verdeutlichten Richtung. In einem Betriebszustand der Folienverpackungsmaschine 10 verläuft die Richtung 48 horizontal und die Richtung 49 vertikal. Die Richtung 48 erstreckt sich gemäß der im Rahmen der vorliegenden Beschreibung verwendeten Terminologie in Richtung einer "Länge" der Folienverpackungsmaschine 10 bzw. eines ihrer Elemente. Die Richtung 49 bezeichnet entsprechend eine "Höhe". Senkrecht zu der Richtung 48 und der Richtung 49 erstreckt sich folglich eine "Breite" der Folienverpackungsmaschine 10 bzw. des Unterstempels 46.

Um die Bewegungen zu bewirken, ist eine Antriebseinrichtung 50 vorgesehen. Die Antriebseinrichtung 50 ist in Fig. 2 lediglich schematisch dargestellt. Es kann sich um eine beliebige Einrichtung handeln, vorzugsweise ist ein Servomotor oder ein anderer geeigneter Elektromotor vorgesehen, um die Bewegungen zu bewirken.

Dazu treibt die Antriebseinrichtung 50 einen zweiseitigen Hebel bzw. Doppelhebel 52 an, der zum einen einen ersten Hebel 54 aufweist, der an den Unterstempel 46 angelenkt ist und zum anderen einen zweiten Hebel 56 aufweist, der an den Oberstempel 44 angelenkt ist. Auf diese Weise kann mittels einer durch die Antriebseinrichtung 50 bewirkten Drehung des Doppelhebels 52 sowohl eine Bewegung des Unterstempels in einer Richtung 49 nach oben als auch eine Bewegung des Oberstempels 44 in einer Richtung 49 nach unten bewirkt werden.

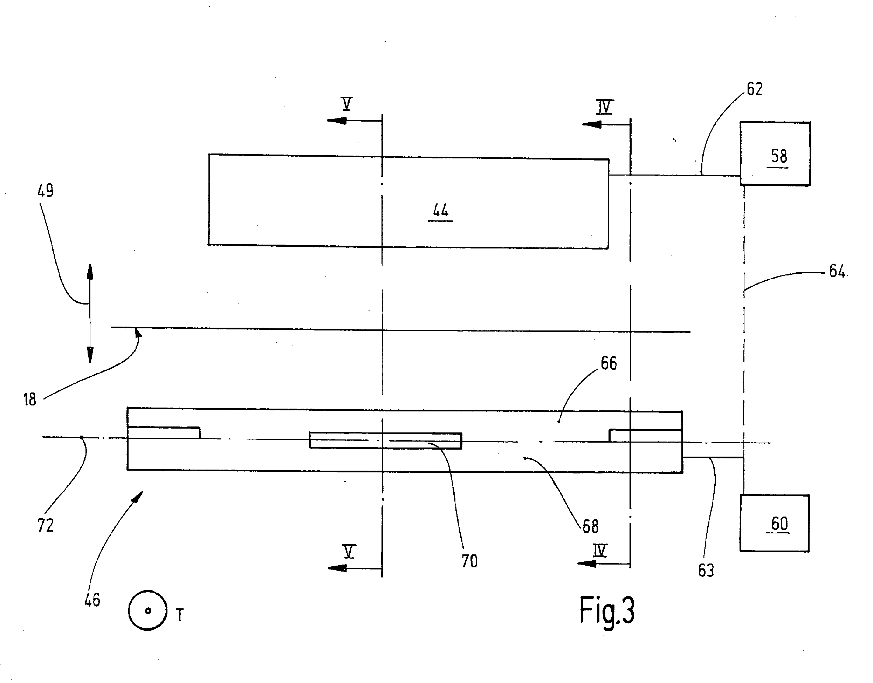

Fig. 3 zeigt eine schematische Querschnittsansicht entlang der Linie III-III in Fig. 2.

Dargestellt ist ein Unterstempel 46 gemäß einer Ausführungsform der Erfindung. Der Unterstempel 46 ist beheizt. Auch der Oberstempel 44 ist in der dargestellten Ausführungsform beheizt. Dazu weist die Folienverpackungsmaschine 10 des Weiteren eine Heizungsregelungseinrichtung 58 für den Oberstempel 44 und eine Heizungsregelungseinrichtung 60 für den Unterstempel 46 auf. Dass zwei separate Heizungsregelungseinrichtungen 58, 60 vorgesehen sind, ist nicht zwingend notwendig, gegebenenfalls kann auch eine einzelne Heizungsregelungseinrichtung für sowohl den Oberstempel 44 als auch den Unterstempel 46 vorgesehen sein. Die Heizungsregelungseinrichtung 58 ist über eine Leitung 62 mit dem Oberstempel 44 verbunden. Die Heizungsregelungseinrichtung 60 ist über eine Leitung 63 mit dem Unterstempel 46 verbunden. Mittels der Leitungen 62, 63 kann sowohl ein in eine jeweilige Beheizungseinrichtung (in der Fig. 3 nicht dargestellt) einzubringender Strom übertragen werden als auch ein Messsignal eines in dem Oberstempel 44 oder dem Unterstempel 46 angeordneten Temperaturfühlers (in der Fig. 3 nicht dargestellt) ausgelesen werden. Sind zwei separate Heizungsregelungseinrichtungen 58, 60 vorgesehen, können diese mittels einer Leitung 64 zum Datenaustausch verbunden sein, um die Beheizung des Oberstempels 44 und des Unterstempels 46 gemeinsam zu regeln bzw. zu synchronisieren.

Der Unterstempel 46 weist eine Druckaufnahmeeinrichtung 66 auf, die aus einem geeigneten Material ausgebildet ist, beispielsweise einem hitzebeständigen Kunststoffmaterial, beispielsweise Silikon, oder aus einem Gummimaterial. Die Druckaufnahmeeinrichtung 66 wird von einer Stützeinrichtung 68 gestützt. Des Weiteren weist in der dargestellten Ausführungsform der Unterstempel 46 ein Leistenelement 70 auf, das die Druckaufnahmeeinrichtung 66 auf der Stützeinrichtung 68 seitlich in Transportrichtung abstützt. Das Leistenelement 70 ist jedoch nicht zwingend vorgesehen, bei einer feststehenden Quertrennschweißvorrichtung 22 kann es beispielsweise auch weggelassen sein.

Der Unterstempel 46 erstreckt sich entlang einer Längsachse 72. Die Längsachse 72 des Unterstempels 46 verläuft somit quer zu der Transportrichtung T.

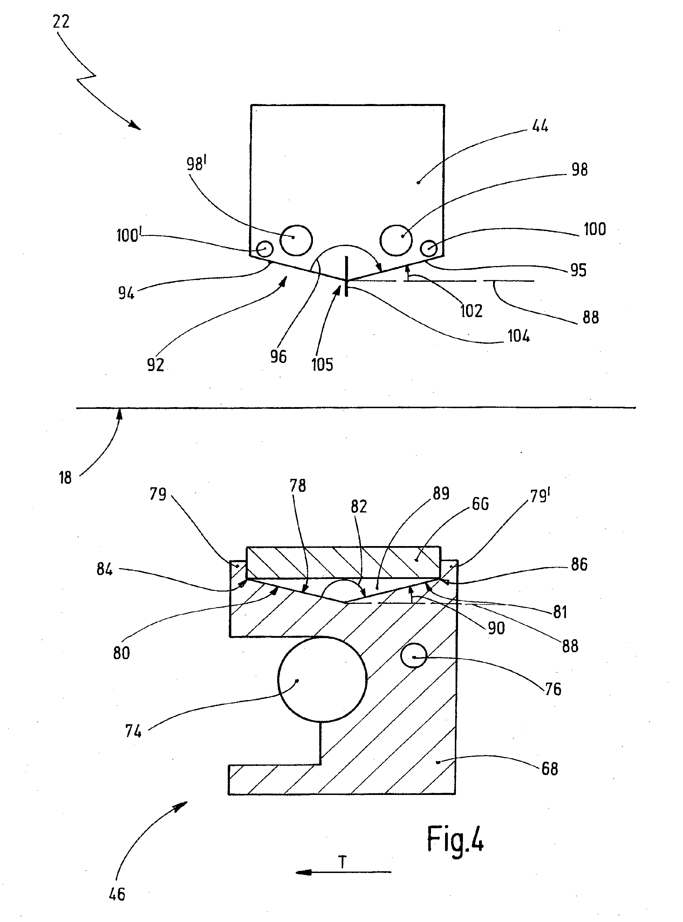

Die Fig. 4 zeigt eine schematische Querschnittsansicht entlang einer Linie IV-IV in Fig. 3.

Schematisch dargestellt ist eine Ausführungsform der Quertrennschweißvorrichtung 22 mit einer Ausführungsform des Unterstempels 46 und einem Oberstempel 44. Der Unterstempel 46 weist eine Beheizungseinrichtung 74 auf, die zum Beheizen der Stützeinrichtung 68 ausgebildet ist. Die Beheizungseinrichtung 74 kann als Heizpatrone ausgebildet sein. Des Weiteren ist ein Temperaturfühler 76 vorgesehen, der sich parallel zu der Längsachse 72 durch die Stützeinrichtung 68 erstreckt. Die Positionen und Anordnungen der Beheizungseinrichtung 74 und des Temperaturfühlers 76 in der Fig. 4 sind lediglich beispielhaft zu verstehen, grundsätzlich sind auch andere Anordnungen in der Stützeinrichtung 68 und relativ zueinander denkbar.

Die Stützeinrichtung 68 weist eine Stützfläche 78 auf. In dem in Fig. 4 dargestellten Querschnitt wird die Stützfläche 78 seitlich von zwei Nuträndern 79, 79' begrenzt, die die Druckaufnahmeeinrichtung 66 seitlich führen. Die Stützfläche 78 ist aus zwei Gegenbacken 80, 81 gebildet, die von der Druckaufnahmeeinrichtung 66 weg aufeinander zu laufen. Die Gegenbacken 80, 81 schließen einen ersten Winkel 82 ein, der insbesondere 150° betragen kann. Aufgrund dieser Ausgestaltung der Stützfläche 78 liegt die Druckaufnahmeeinrichtung 66 in ihrer Ruhelage, wie sie in Fig. 4 dargestellt ist, lediglich mit zwei Kanten 84, 86 auf der Stützfläche 78 auf.

Entsprechend der Ausgestaltung des ersten Winkels 82 bilden die Gegenbacken 80, 81 mit einer parallel zu der Transportrichtung T verlaufenden Horizontalrichtung 88 einen dritten Winkel 90. Dieser kann insbesondere 15° betragen. Zwischen den Gegenbacken 80, 81 und der Druckaufnahmeeinrichtung 66 ist so ein Luftspalt 89 gebildet, in den die Druckaufnahmeeinrichtung 66 bei einem Zusammenführen von Oberstempel 44 und Unterstempel 46 gedrückt wird.

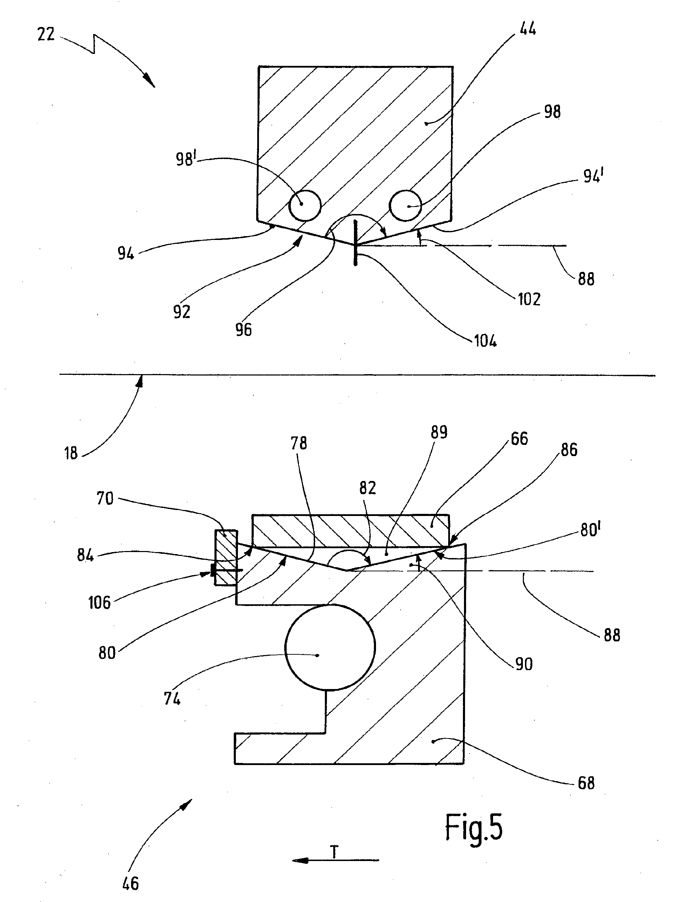

Ebenfalls in Fig. 4 dargestellt ist der Oberstempel 44 in Seitenansicht. In dem in der Fig. 4 dargestellten Querschnitt, der relativ zu dem in Fig. 5 dargestellten Querschnitt in einem äußeren Randbereich der Folienverpackungsmaschine 10 liegt, wird keine Quertrennschweißung in der Folienebene 18 vorgenommen, so dass der Oberstempel 44 nicht durch den in Fig. 4 dargestellten Querschnitt hindurch ragt und somit nicht auf die Nutränder 79, 79' schlagen kann.

Der Oberstempel 44 weist eine Quertrennschweißfläche 92 auf, die aus zwei Siegelbacken 94, 95 gebildet ist. Die beiden Siegelbacken 94, 95 schließen zwischen sich einen zweiten Winkel 96 ein. Der zweite Winkel 96 entspricht dem ersten Winkel 82. Somit entsprechen die Querschnittsgeometrien der Quertrennschweißfläche 92 des Oberstempels 44 und der Stützfläche 78 des Unterstempels 46 einander.

Somit kann der zweite Winkel 96 insbesondere 150° betragen. In der dargestellten Ausführungsform weist der Oberstempel 44 darüber hinaus zwei Beheizungseinrichtungen 98, 98' auf, wobei jeweils eine der Beheizungseinrichtungen 98, 98' für entsprechend eine der Siegelbacken 94, 95 vorgesehen ist. Dementsprechend sind in der dargestellten Ausführungsform auch zwei Temperaturfühler 100, 100' für jeweils eine der Siegelbacken 94, 95 vorgesehen. Diese Ausführungsform ist jedoch lediglich beispielhaft. Auch der Oberstempel 44 kann grundsätzlich lediglich eine Beheizungseinrichtung 98 und einen Temperaturfühler 100 aufweisen. Darüber hinaus sind jedoch sowohl in dem Oberstempel 44 als auch in dem Unterstempel 46 auch noch mehr Beheizungseinrichtungen 74, 98, 98' denkbar.

Die Siegelbacken 94, 95 schließen mit der Horizontalen 88 entsprechend einen vierten Winkel 102 ein, der insbesondere 15° beträgt.

In der dargestellten Ausführungsform ist des Weiteren in dem Oberstempel 44 ein Schneidmesser 104 vorgesehen, das aus der Quertrennschweißfläche 92 herausragt, insbesondere ragt das Schneidmesser 104 zwischen den Siegelbacken 94, 95 aus der Quertrennschweißfläche 92 heraus. Es ist jedoch nicht zwingend, dass der Oberstempel 44 ein Schneidmesser 104 aufweist. Dies ist nur dann geboten, wenn aufgrund der Dicke der zu verschweißenden Folie es notwendig ist, dass eine mechanische Trennung der Folienbahn mittels des Schneidmessers 104 erfolgt. Ansonsten kann auf übliche Weise eine Wärmetrennung mittels der Siegelbacken 94, 95 und der aufgrund ihres jeweiligen vierten Winkels 102 gegenüber der Horizontalen 88 gebildeten Finne 105 erfolgen.

In Fig. 5 ist ein schematischer Querschnitt entlang einer Linie V-V in Fig. 3 dargestellt. Gleiche Elemente sind mit gleichen Bezugszeichen gekennzeichnet, im Folgenden wird lediglich auf die Unterschiede eingegangen.

Der schematische Querschnitt in Fig. 5 verläuft in einem Bereich der Quertrennschweißvorrichtung 22, in der der Oberstempel 44 und der Unterstempel 46 die zu verschweißende Folie zwischen sich klemmen. Entsprechend sind sowohl der Oberstempel 44 als auch der Unterstempel 46 geschnitten. Temperaturfühler ragen in diesen Bereich des Oberstempels 44 und des Unterstempels 46 nicht mehr herein, so dass sie entsprechend nicht in der dargestellten Schnittansicht vorhanden sind. In diesem Bereich kann es jedoch vorkommen, dass die Druckaufnahmeeinrichtung 66 aufgrund einer Walkbewegung, die eventuell bei einer mitlaufenden Quertrennschweißvorrichtung, wie sie beispielsweise in der Druckschrift US 5,653,085 B dargestellt ist, erfolgen kann, in Transportrichtung T von der Stützfläche 78 herunterrutscht. Dies kann geschehen, da die Druckaufnahmeeinrichtung 66 in diesem Bereich nicht durch Nutränder 79, 79' geführt ist.

Entsprechend ist ein Leistenelement 70 derart mittels eines Befestigungselements 106 an der Stützeinrichtung 68 angeordnet, dass der Oberstempel 44 zwar bei einem Zusammenfügen des Oberstempels 44 mit dem Unterstempel 46 nicht auf das Leistenelement 70 aufschlägt, dieses aber gleichwohl dazu in der Lage ist, die Druckaufnahmeeinrichtung 66 gegen ein Herabrutschen in Transportrichtung T von der Stützfläche 78 zu sichern.

In der dargestellten Ausführungsform ist das Leistenelement 70 als separates Bauteil dargestellt, das mittels des Befestigungselements 106 an der Stützeinrichtung 68 befestigt ist. Grundsätzlich kann das Leistenelement 70 jedoch auch einstückig mit der Stützeinrichtung 68 ausgebildet sein.

## Patentansprüche

1. Unterstempel (46) für eine Quertrennschweißvorrichtung (22) einer Folienverpackungsmaschine (10), mit einer Druckaufnahmeeinrichtung (66), die dazu ausgebildet ist, ein Gegenelement für einen Oberstempel (44) bereitzustellen, und einer Stützeinrichtung (68) zum Stützen der Druckaufnahmeeinrichtung (66), wobei der Unterstempel (46) des Weiteren zumindest eine Beheizungseinrichtung (74) aufweist, die zum Beheizen der Stützeinrichtung (68) ausgebildet ist, **dadurch gekennzeichnet, dass** die Stützeinrichtung (68) eine Stützfläche (78) aufweist, auf der die Druckaufnahmeeinrichtung (66) aufliegt, wobei eine Querschnittsgeometrie der Stützfläche (78) aus zwei weg von der Druckaufnahmeeinrichtung (66) aufeinander zu laufenden Gegenbacken (80, 81) gebildet ist.

2. Unterstempel nach Anspruch 1, **dadurch gekennzeichnet, dass** der Unterstempel (46) eine Längsachse (72) aufweist, entlang derer sich der Unterstempel (46) erstreckt, wobei die Beheizungseinrichtung (74) parallel zu der Längsachse (72) durch die Stützeinrichtung (68) geführt ist.

3. Unterstempel nach Anspruch 1 oder 2, **dadurch gekennzeichnet, dass** die Beheizungseinrichtung (74) als Heizpatrone ausgebildet ist.

4. Unterstempel nach einem der Ansprüche 1 bis 3, **dadurch gekennzeichnet, dass** die Gegenbacken (80, 81) V-förmig aufeinander zu laufen.

5. Unterstempel nach einem der Ansprüche 1 bis 4, **dadurch gekennzeichnet, dass** die Gegenbacken (80, 81) einen ersten Winkel (82) einschließen, der in einem Bereich von 130° bis 170° liegt.

6. Unterstempel nach einem der Ansprüche 1 bis 5, **dadurch gekennzeichnet, dass** eine Querschnittsgeometrie der Druckaufnahmeeinrichtung (66) rechteckig ist, und wobei die Druckaufnahmeeinrichtung (66) lediglich mit zwei Kanten (84, 86) auf der Stützfläche (78) aufliegt.

7. Unterstempel nach einem der Ansprüche 1 bis 6, **dadurch gekennzeichnet, dass** der Unterstempel (46) einen Temperaturfühler (76) aufweist, der parallel zu einer Längsachse (72) des Unterstempels (46) in die Stützeinrichtung (68) geführt ist.

8. Unterstempel nach einem der Ansprüche 1 bis 7, **dadurch gekennzeichnet, dass** der Unterstempel (46) des Weiteren ein Leistenelement (70) aufweist, das parallel zu einer Längsachse (72) des Unterstempels (46) verläuft, wobei das Leistenelement (70) derart an der Stützeinrichtung (68) angeordnet ist, dass es die Druckaufnahmeeinrichtung (66) seitlich abstützt.

9. Quertrennschweißvorrichtung (22) für eine Folienverpackungsmaschine (10), wobei die Quertrennschweißvorrichtung (22) einen Unterstempel (46) aufweist, wobei der Unterstempel (46) eine Druckaufnahmeeinrichtung (66), die dazu ausgebildet ist, ein Gegenelement für einen Oberstempel (44) bereitzustellen, und eine Stützeinrichtung (68) zum Stützen der Druckaufnahmeeinrichtung (66) aufweist, wobei der Unterstempel (46) des Weiteren zumindest eine Beheizungseinrichtung (74) aufweist, die zum Beheizen der Stützeinrichtung (68) ausgebildet ist, wobei die Stützeinrichtung (68) des Unterstempels (46) eine Stützfläche (78) aufweist, auf der die Druckaufnahmeeinrichtung (66) aufliegt, und wobei die Quertrennschweißvorrichtung (22) des Weiteren einen Oberstempel (44) aufweist, der eine dem Unterstempel (46) zugewandte Quertrennschweißfläche (92) aufweist, **dadurch gekennzeichnet, dass** die Quertrennschweißfläche (92) eine Querschnittsgeometrie aufweist, die der Querschnittsgeometrie der Stützfläche (78) entspricht.

10. Quertrennschweißvorrichtung nach Anspruch 9, **dadurch gekennzeichnet, dass** eine Querschnittsgeometrie der Quertrennschweißfläche (92) des Oberstempels (44) aus zwei in Richtung des Unterstempels (46) aufeinander zu laufenden Siegelbacken (94, 95) gebildet ist, die einen zweiten Winkel (96) einschließen, wobei eine Querschnittsgeometrie der Stützfläche (78) aus zwei weg von der Druckaufnahmeeinrichtung (66) aufeinander zu laufenden Gegenbacken (80, 81) gebildet ist, die einen ersten Winkel (82) einschließen, und wobei der erste Winkel (82) dem zweiten Winkel (96) entspricht.

11. Quertrennschweißvorrichtung nach Anspruch 9 oder 10, **dadurch gekennzeichnet, dass** der Oberstempel (44) zumindest eine Beheizungseinrichtung (98) zum Beheizen der Quertrennschweißfläche (92) aufweist.

12. Quertrennschweißvorrichtung nach einem der Ansprüche 9 bis 11, **dadurch gekennzeichnet, dass** der Oberstempel (44) ein aus der Quertrennschweißfläche (92) herausragendes Schneidmesser (104) aufweist.

13. Quertrennschweißvorrichtung nach den Ansprüchen 10 und 12, **dadurch gekennzeichnet, dass** das Schneidmesser (104) zwischen den Siegelbacken (94, 95) aus der Quertrennschweißfläche (92) herausragt.

14. Folienverpackungsmaschine (10) mit einem Unterstempel (46) nach einem der Ansprüche 1 bis 8 oder einer Quertrennschweißvorrichtung (22) nach einem der Ansprüche 9 bis 13.

## Revendications

1. Poinçon inférieur (46) pour un dispositif de soudage-découpage transversal (22) d'une machine d'emballage à feuilles (10), avec un dispositif de reprise de pression (66), qui est conçu pour fournir un contre-élément pour un poinçon supérieur (44), et avec un dispositif d'appui (68) pour soutenir le dispositif de reprise de pression (66), dans lequel le poinçon inférieur (46) présente en outre au moins un dispositif de chauffage (74), qui est conçu pour chauffer le dispositif d'appui (68), **caractérisé en ce que** le dispositif d'appui (68) présente une face d'appui (78), sur laquelle le dispositif de reprise de pression (66) est posé, dans lequel une géométrie de section transversale de la face d'appui (78) est formée de deux contre-mâchoires (80, 81) s'étendant l'une vers l'autre en s'écartant du dispositif de reprise de pression (66).

2. Poinçon inférieur selon la revendication 1, **caractérisé en ce que** le poinçon inférieur (46) présente un axe longitudinal (72), le long duquel le poinçon inférieur (46) s'étend, dans lequel le dispositif de chauffage (74) est mené parallèlement à l'axe longitudinal (72) à travers le dispositif d'appui (68).

3. Poinçon inférieur selon la revendication 1 ou 2, **caractérisé en ce que** le dispositif de chauffage (74) est réalisé sous la forme d'une cartouche de chauffage.

4. Poinçon inférieur selon l'une quelconque des revendications 1 à 3, **caractérisé en ce que** les contre-mâchoires (80, 81) s'étendent l'une vers l'autre en forme de V.

5. Poinçon inférieur selon l'une quelconque des revendications 1 à 4, **caractérisé en ce que** les contre-mâchoires (80, 81) forment un premier angle (82), qui se situe dans une plage de 130° à 170°.

6. Poinçon inférieur selon l'une quelconque des revendications 1 à 5, **caractérisé en ce qu'**une géométrie de la section transversale du dispositif de reprise de pression (66) est rectangulaire, et dans lequel le dispositif de reprise de pression (66) repose uniquement par deux bords (84, 86) sur la face d'appui (78).

7. Poinçon inférieur selon l'une quelconque des revendications 1 à 6, **caractérisé en ce que** le poinçon inférieur (46) présente un capteur de température (76), qui est mené parallèlement à un axe longitudinal (72) du poinçon inférieur (46) dans le dispositif d'appui (68).

8. Poinçon inférieur selon l'une quelconque des revendications 1 à 7, **caractérisé en ce que** le poinçon inférieur (46) présente en outre un élément de barrette (70), qui s'étend parallèlement à un axe longitudinal (72) du poinçon inférieur (46), dans lequel l'élément de barrette (70) est agencé de telle manière sur le dispositif d'appui (68) qui soutienne latéralement le dispositif de reprise de pression (66).

9. Dispositif de soudage-découpage transversal (22) pour une machine d'emballage à feuilles (10), dans lequel le dispositif de soudage-découpage transversal (22) présente un poinçon inférieur (46), dans lequel le poinçon inférieur (46) présente un dispositif de reprise de pression (66), qui est conçu de façon à former un contre-élément pour un poinçon supérieur (44), et un dispositif d'appui (68) pour soutenir le dispositif de reprise de pression (66), dans lequel le poinçon inférieur (46) présente au moins un dispositif de chauffage (74), qui est conçu pour chauffer le dispositif d'appui (68), dans lequel le dispositif d'appui (68) du poinçon inférieur (46) présente une face d'appui (78), sur laquelle le dispositif de reprise de pression (66) est posé, et dans lequel le dispositif de soudage-découpage transversal (22) présente en outre un poinçon supérieur (44), qui présente une face de soudage-découpage transversal (92) tournée vers le poinçon inférieur (46), **caractérisé en ce que** la face de soudage-découpage transversal (92) présente une géométrie de section transversale, qui correspond à la géométrie de section transversale de la face d'appui (78).

10. Dispositif de soudage-découpage transversal selon la revendication 9, **caractérisé en ce qu'**une géométrie de section transversale de la face de soudage-découpage transversal (92) du poinçon supérieur (44) est formée de deux mâchoires de scellement (94, 95) s'étendant l'une vers l'autre en direction du poinçon inférieur (46), qui forment un deuxième angle (96), dans lequel la géométrie de section transversale de la face d'appui (78) est formée de deux contre-mâchoires (80, 81) s'étendant l'une vers l'autre en s'écartant du dispositif de reprise de pression (66), qui forment un premier angle (82), et dans lequel le premier angle (82) correspond au deuxième angle (96).

11. Dispositif de soudage-découpage transversal selon la revendication 9 ou 10, **caractérisé en ce que** le poinçon supérieur (44) présente au moins un dispositif de chauffage (98) pour le chauffage de la face de soudage-découpage transversal (92).

12. Dispositif de soudage-découpage transversal selon l'une quelconque des revendications 9 à 11, **caractérisé en ce que** le poinçon supérieur (44) présente une lame de coupe (104) saillante hors de la face de soudage-découpage transversal (92).

13. Dispositif de soudage-découpage transversal selon les revendications 10 et 12, **caractérisé en ce que** la lame de coupe (104) est saillante hors de la face de soudage-découpage transversal (92) entre les mâchoires de scellement (94, 95).

14. Machine d'emballage à feuilles (10) avec un poinçon inférieur (46) selon l'une quelconque des revendications 1 à 8 ou avec un dispositif de soudage-découpage transversal (22) selon l'une quelconque des revendications 9 à 13.

## Claims

1. Lower die (46) for a transverse severing/welding apparatus (22) of a film-packaging machine (10), having a pressure-absorbing device (66), which is intended to provide a counterpart for an upper die (44), and having a supporting device (68) for supporting the pressure-absorbing device (66), wherein the lower die (46) also has at least one heating device (74), which is designed for heating the supporting device (68), **characterized in that** the supporting device (68) has a supporting surface (78), on which the pressure-absorbing device (66) rests, wherein a cross-sectional geometry of the supporting surface (78) is formed from two abutment jaws (80, 81), which run towards one another in the direction away from the pressure-absorbing device (66).

2. Lower die according to Claim 1, **characterized in that** the lower die (46) has a longitudinal axis (72), along which the lower die (46) extends, wherein the heating device (74) is guided parallel to the longitudinal axis (72) by the supporting device (68).

3. Lower die according to Claim 1 or 2, **characterized in that** the heating device (74) is designed in the form of a heating cartridge.

4. Lower die according to one of Claims 1 to 3, **characterized in that** the abutment jaws (80, 81) run towards one another in a V-shaped manner.

5. Lower die according to one of Claims 1 to 4, **characterized in that** the abutment jaws (80, 81) enclose a first angle (82), which ranges from 130° to 170°.

6. Lower die according to one of Claims 1 to 5, **characterized in that** a cross-sectional geometry of the pressure-absorbing device (66) is rectangular, and wherein the pressure-absorbing device (66) has merely two edges (84, 86) resting on the supporting surface (78).

7. Lower die according to one of Claims 1 to 6, **characterized in that** the lower die (46) has a temperature sensor (76), which is guided into the supporting device (68) parallel to a longitudinal axis (72) of the lower die (46).

8. Lower die according to one of Claims 1 to 7, **characterized in that** the lower die (46) also has a strip element (70), which runs parallel to a longitudinal axis (72) of the lower die (46), wherein the strip element (70) is arranged on the supporting device (68) such that it supports the pressure-absorbing device (66) laterally.

9. Transverse severing/welding apparatus (22) for a film-packaging machine (10), wherein the transverse severing/welding apparatus (22) has a lower die (46), wherein the lower die (46) has a pressure-absorbing device (66), which is intended to provide a counterpart for an upper die (44), and also has a supporting device (68) for supporting the pressure-absorbing device (66), wherein the lower die (46) also has at least one heating device (74), which is designed for heating the supporting device (68), wherein the supporting device (68) of the lower die (46) has a supporting surface (78), on which the pressure-absorbing device (66) rests, and wherein the transverse severing/welding apparatus (22) also has an upper die (44), which has a transverse severing/welding surface (92) directed towards the lower die (46), **characterized in that** the transverse severing/welding surface (92) has a cross-sectional geometry which corresponds to the cross-sectional geometry of the supporting surface (78).

10. Transverse severing/welding apparatus according to Claim 9, **characterized in that** a cross-sectional geometry of the transverse severing/welding surface (92) of the upper die (44) is formed from two sealing jaws (94, 95), which run towards one another in the direction of the lower die (46) and enclose a second angle (96), wherein a cross-sectional geometry of the supporting surface (78) is formed from two abutment jaws (80, 81), which run towards one another in the direction away from the pressure-absorbing device (66) and enclose a first angle (82), and wherein the first angle (82) corresponds to the second angle (96).

11. Transverse severing/welding apparatus according to Claim 9 or 10, **characterized in that** the upper die (44) has at least one heating device (98) for heating the transverse severing/welding surface (92).

12. Transverse severing/welding apparatus according to one of Claims 9 to 11, **characterized in that** the upper die (44) has a cutting blade (104), which projects out of the transverse severing/welding surface (92).

13. Transverse severing/welding apparatus according to Claims 10 and 12, **characterized in that** the cutting blade (104) projects out of the transverse severing/welding surface (92) between the sealing jaws (94, 95).

14. Film-packaging machine (10) having a lower die (46) according to one of Claims 1 to 8 or having a transverse severing/welding apparatus (22) according to one of Claims 9 to 13.
